# EUROPEAN PATENT APPLICATION

(11) **EP 2 919 083 A1**
(43) Date of publication of application: **16.09.2015**
(21) Application number: 15157828.3
(22) Date of filing: 05.03.2015
(51) Int. Cl.: G05B 19/4097, G05B 19/4155

(54) **Machine tool control process**

(30) Priority: 11.03.2014 EP 14275053
(71) Applicant: Renishaw plc, Gloucestershire GL12 8JR (GB)
(72) Inventor: Hathaway, Iain Roger, Wotton-under-Edge, Gloucestershire GL12 8JR (GB)
(74) Representative: Rolfe, Edward William

(57) **Abstract**

A computer implemented function for a machine tool apparatus comprising a machine tool and a controller, the function callable by a machine tool program which is executable by the controller, the function comprising at least one measurement instruction for effecting control of a measurement device so as to measure a workpiece, characterised in that the function comprises at least one instruction for checking, prior to facilitating execution of at least one measurement instruction, that the machine tool apparatus is ready to perform the at least one measurement instruction, and the function further comprising at least one instruction configured such that if the check determines that the machine tool apparatus is not ready, then the function sets up the machine tool apparatus such that it is ready to perform the at least one measurement instruction.

## Description

The present invention relates to the control of machine tool apparatus having a numeric controller (NC) or the like.

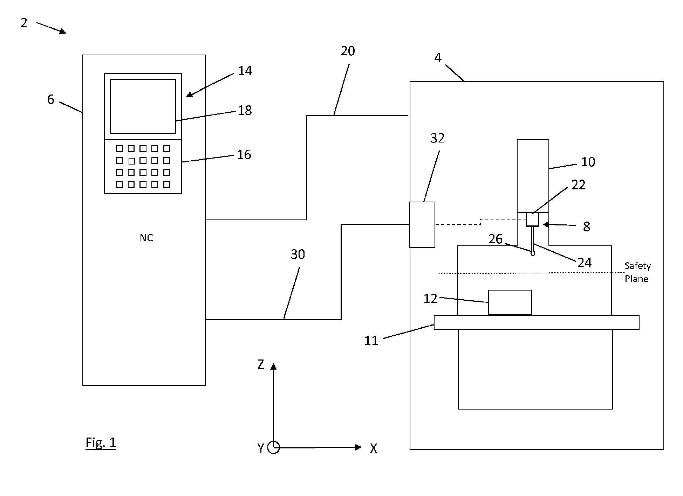

As will be understood a machine tool apparatus is an apparatus for machining a workpiece. Typically, a machine tool apparatus comprises a numerical controller (NC) also referred to as a computer numerical controller (CNC) (or simply "controller") for controlling operation of the machine tool in accordance with a program loaded on the controller. As will be understood, the term machine tool encompasses a wide variety of different machines such as lathes, drilling machines, milling machines, grinding machines, etc. It is known to mount a measurement device, for example a measurement probe, on a machine tool for inspecting a workpiece (for example before and/or after machining of the workpiece). In many circumstances it is known to mount the measurement device on the machine tool's spindle (e.g. the spindle on which a tool such as a drill bit is loaded during a machining operation). The measurement device and workpiece can be driven relative to each other in order for the measurement device to take measurements of the workpiece. As mentioned above, measurement devices can comprise measurement probes, which could for example comprise a touch-trigger probe or an analogue probe, e.g. for scanning along the surface of the part. An example machine tool apparatus 2 is illustrated in Figure 1 in which as generally illustrated comprises a machine tool 4 (on which a probe 8 is loaded into the machine tool's spindle 10 for inspecting a workpiece 12) and a NC 6.

Currently when performing a measurement move it is known for the controller to monitor for triggering of a probe (e.g. deflection of a probe beyond a threshold). This can be done by the machine tool controller monitoring what is commonly referred to in the machine tool field as a SKIP variable. When the probe triggers, it issues a signal which changes the SKIP variable for a change of state, e.g. from 0 to 1 (or vice versa). The machine tool controller spots this and interrupts the measurement instruction (i.e. it "skips" the rest of the measurement instruction). Accordingly, the machine tool prevents movement of the measurement probe when SKIP is set to 1. It is also known to set the SKIP variable to 1 as default and to only set SKIP to 0 when the measurement probe is turned on such that movement of the measurement probe is prevented when the probe is turned off.

As will be understood, a program needs to be supplied to the NC in order for the NC to know how to operate the machine tool (e.g. move its various axes) so as to machine and/or measure the workpiece. Typically, these programs are in low level code, for example comprise instructions that are directly readable by the NC. For instance, machine tool programs are often written in what is commonly referred to as ISO codes and comprise a series of what are commonly referred to as G codes and M codes. Often the program for machining a workpiece has been pre-generated (e.g. by an operator using a CAM program) and loaded into a machine tool. Once loaded into the machine tool, the machine tool operator may want to add measurement instructions and the operator can add these in line by line, for example using an interface 14 comprising a keyboard 16 and screen 18 provided on the NC 6 itself. Not only can this be time consuming and laborious, but it can often be error prone.

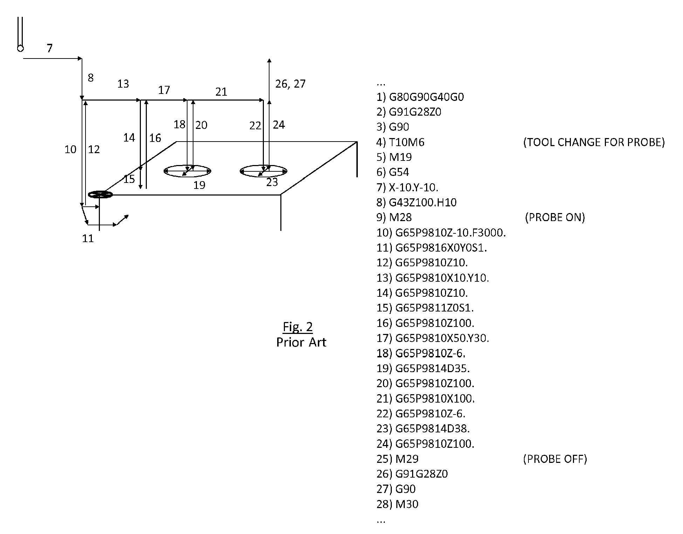

Figure 2 shows an example code for measuring a corner and two holes in an example workpiece. As can be seen, the first six lines of code are taken up with general "house-keeping" activities such as cancelling already running other cycles/functions, sending the spindle to a home position, and loading the probe into the spindle. Also, as can be seen many different lines of code are required in order to perform the various moves of the spindle and probe. The motions corresponding with the lines of code are numbered in the drawing to aid understanding.

Attempts have already been made to simplify the addition of measuring instructions into a machine tool program. For example, Productivity+ is a software package available from Renishaw PLC which enables users to prepare a work flow for a procedure for measuring an object on a machine tool program. To aid preparation by a user (especially those not familiar with G and M codes) the instructions in the work flow are in a high-level language (i.e. in a form not executable by a machine tool controller). Once the user has prepared the work flow, then it is compiled into instructions executable by the machine tool's controller and at the same time additional setting up and house-keeping instructions are added by the compiler in order to produce a program such as that illustrated by Figure 2. For example, instructions implementing conceptual flags are inserted by the complier into the program which are used to confirm which elements have already been activated.

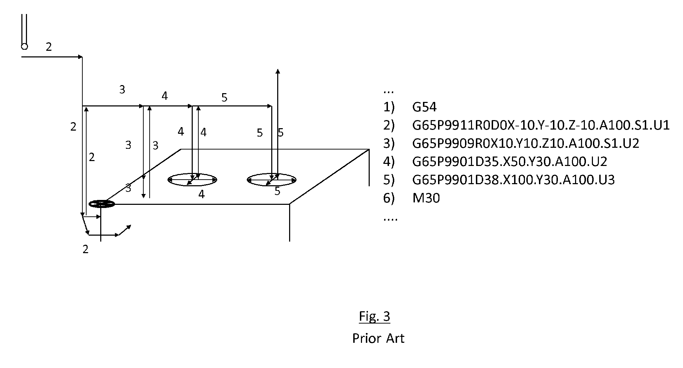

As another example of an attempt to simplify the addition of measuring instructions into a machine tool program, Figure 3 illustrates how macros can be used to condense multiple instructions into a single instruction call. Furthermore, various codes U1, U2, U3 (or no U present) can be used to link successive instructions together and tell the machine tool what stage of the measurement the program is at. For instance, a U1 code is used for the first measurement and initiates various set up procedures including the tool change operation and moving the Z-axis of the machine to a reference position, a U2 is used for second and subsequent instructions up to the penultimate instruction and tells the spindle/probe to return to a retract height (specified by the "A" parameter) and U3 is used for the final instruction and tells the spindle/probe to return to a machine reference (e.g. home) position (if no U code is present then it always starts and ends at a machine reference (e.g. home) position). However, even with the provision of such macros it has been found that operators, especially those that are relatively inexperienced, are still making fundamental errors in their programming of machine tools which lead to crashes and inferior measurement operations.

Our invention provides an improvement in the programming of machine tools which leads to safer measurement operations, reducing the risk of crashing and hence reducing the risk of damage to the machine tool, probe and/or workpiece, as well as enabling less experienced operators to include measurement instructions in a safe manner, and enabling novices to learn how to program a machine tool more quickly.

This invention relates to a computer implemented function that is callable by a machine tool program which is executable by a processor for controlling a machine tool apparatus. The function can comprise instructions enabling control of a measurement device so as to measure a workpiece, and can be characterised in it comprises at least one instruction for checking, prior to execution of the measurement instructions, at least one property concerning the measurement device so as to prevent execution of measurement instructions with the machine tool in a state in which at least one safety critical property required for a safe measurement operation has not been set.

A function according to the invention can therefore perform at least one safety checking step before allowing execution of a measurement instruction in order to significantly reduce the chance of an unsafe measurement operation being performed that could cause damage to the measurement device, workpiece and/or machine tool.

According to a first aspect of the invention there is provided a computer implemented function for a machine tool apparatus comprising a machine tool and a controller, the function callable by a machine tool program which is executable by the controller, the function comprising at least one measurement instruction for effecting control of a measurement device so as to measure a workpiece, characterised in that the function comprises at least one instruction for checking, prior to facilitating execution of at least one measurement instruction, that the machine tool apparatus is ready to perform the at least one measurement instruction, and the function further comprising at least one instruction configured such that if the check determines that the machine tool apparatus is not ready, then the function sets up the machine tool apparatus such that it is ready to perform the at least one measurement instruction.

The function of the invention therefore ensures that the machine tool apparatus (be it the machine tool or the controller or both) is in a state in which it is ready to perform the measurement instruction. This helps to avoid the situation in which the measurement instruction is performed when the machine tool apparatus has not been properly set up. In particular, a function according to the present invention has built-in provision to catch those situations in which the machine tool program has been programmed poorly, for example where the programmer has forgot to perform certain setting up steps before initiation of the measurement instruction and/or where the programmer uses incorrect instructions and/or input parameters. The present invention therefore provides a so-called "fool-proof" function which ensures that the measurement device will be controlled in a safe and proper manner, thereby significantly reducing, if not removing, the risk of an unsafe measurement operation, in particular reducing the risk of crashes and hence reducing the risk of damage to the machine tool, probe and/or workpiece.

The at least one instruction for checking can comprise establishing whether the machine tool apparatus is currently set up to use the measurement device that is to be used to measure the workpiece. For example, the machine tool controller can comprise a tool offset variable. The instruction for checking can comprise checking the tool offset variable. The instruction can comprise checking that the tool offset variable is set/active. For example, the instruction for checking can comprise comparing the tool offset variable to the tool offset for the measurement device. For instance, the instruction can comprise checking that the value of the tool offset variable matches that of the measurement device to be used. Optionally, the instruction can comprise checking that the tool offset variable's number/reference is the correct tool offset number/reference for the measurement device.

Said at least one instruction for checking can comprise checking live/current machine parameters, e.g. machine values. Accordingly, rather than relying on flags to determine machine status, the method relies on a direct interrogation or verification of the current machine set up/status. This could comprise for example checking the current machine axis positions. Optionally, this could comprise for example checking the active tool offset value.

The at least one instruction can comprise checking where in the machine tool's operating volume the measurement device is (or a part of the machine tool to which the measurement device is attached, e.g. the machine tool's spindle) with respect to the workpiece. For example, the at least one instruction for checking can comprise checking if the measurement device (or a part of the machine tool to which the measurement device is attached) and/or the workpiece, is at a predetermined position, for example at a predetermined safety position, e.g. at a predetermined safety plane.

As will be understood, exactly what the machine tool apparatus needs in order to be ready will vary from machine tool apparatus to machine tool apparatus. Nevertheless, for example, a machine tool apparatus can be ready when any variables referred to by the at least one measurement instruction have been set. For example, a tool offset is a commonly used variable which essentially tells the controller the length of the tool (e.g. the measurement device) loaded on the machine tool (e.g. loaded in the machine tool's spindle). If this is not active and/or is not correct, the controller could end up causing the tool (e.g. the measurement device) to crash into the workpiece and/or the machine tool itself, thereby damaging the tool, machine tool and/or workpiece. Other aspects/attributes of the machine tool apparatus that could dictate whether the machine tool apparatus is ready could comprise that the measurement device is arranged in the machine tool so as to be used to measure a workpiece (e.g. the measurement device is loaded into the machine tool's spindle), that the measurement device is turned on, and/or that the measurement device is at a predetermined position with respect to the workpiece.

It might be that the machine tool apparatus requires a number of attributes having a particular status in order to be ready. The at least one instruction for checking can comprise checking at least one machine tool apparatus attribute (e.g. at least one controller attribute and/or at least one machine tool attribute), the status of which is indicative of whether a plurality of other machine tool apparatus attributes required for the machine tool apparatus to be ready to perform the at least one measurement instruction have been set. Accordingly, rather than checking all of the attributes required to be ready, the instruction can comprise checking just one, or a select subset of the attributes.

The function can comprise instructions for moving the measurement device and/or workpiece to either a predefined safety position or to the machine tool's default home position after execution of the at least one measurement instruction.

The safety position can be a safety plane. The safety plane can be a global safety plane. The safety plane and/or the home position can be defined by a variable specified in the controller. The safety plane and/or the home position can be specific to the machine tool. Where the measurement device and/or workpiece are moved to can depend on a parameter input to the function. Accordingly, the function can comprise as an input parameter, a measurement instruction linking parameter, which the function uses to determine how to relatively move the workpiece and measurement device after execution of the measurement instructions (e.g. to a home position or to a safety position/plane). Optionally, the function only accepts two valid linking input parameters, e.g. one which instructs the controller to move the measurement device to the safety plane and one which instructs the controller to move the measurement device to the machine's home position.

The at least one measurement instruction enabling control of a measurement device so as to measure a workpiece can comprise a call to another function (e.g. a sub-function or a sub-routine) which comprises measurement instructions. Accordingly, the function according to the invention can comprise said at least one instruction for checking being arranged to be performed before the call to the other function which comprises the measurement instructions. The function according to the invention could be configured to accept an input parameter which is used to indicate which, of a selection, sub-function/routine to call. Accordingly, optionally, only one function is necessary for all different types of measurement operations. Nevertheless, as will be understood, this need not necessarily be the case and for instance a plurality of different functions that are directly callable by the machine tool program can be provided, wherein each of the functions have been provided with the checking instructions.

The measurement device can comprise a measurement probe, in particular a dimensional/position measurement probe. The measurement device can comprise a contact measurement probe. The measurement device can comprise a touch-trigger probe. The measurement device can comprise an analogue or scanning probe. The measurement device can be tool-changeable. That is the measurement device could be configured to be stored in a rack and loaded into the machine tool's operating volume (e.g. into the machine tool's spindle) when required.

According to a second aspect of the invention there is provided a machine tool program for controlling a machine tool to interact with a workpiece, the machine tool program comprising at least one call to a function as described above.

According to a third aspect of the invention there is provided a computer program product, comprising at least one function callable by a machine tool program, said at least one function comprising at least one instruction for enabling control of a measurement device so as to measure a workpiece, characterised in that at least one function comprises at least one instruction for checking, prior to execution of any measurement instructions, that the machine tool apparatus is in a state in which it is ready to perform the at least one measurement instruction, and the function further comprising at least one instruction so that if the check determines that the machine tool apparatus is not ready, then the function sets up the machine tool apparatus such that it is in a state in which it is ready to perform the at least one measurement instruction.

Optionally, all functions callable by the machine tool program for enabling measurement of a workpiece can comprise said at least one instruction for checking, prior to execution of any measurement instructions, that the machine tool apparatus is in a state in which it is ready to perform the at least one measurement instruction, and the function further comprising at least one instruction so that if the check determines that the machine tool apparatus is not ready, then the function sets up the machine tool apparatus such that it is in a state in which it is ready to perform the at least one measurement instruction.

According to a fourth aspect of the invention there is provided a controller for a machine tool, comprising memory storing at least one function callable by a machine tool program which is executable by a processor of the controller, the function comprising at least one instruction for enabling control of a measurement device loaded on the machine tool so as to measure a workpiece, characterised in that the function comprises instructions for checking, prior to facilitating execution of the at least one measurement instruction, that the controller and/or the machine tool is in a state in which it is ready to perform the at least one measurement instruction, and the function further comprising at least one instruction so that if the check determines that the controller and/or the machine tool is not ready, then the function sets up the controller and/or the machine tool such that it is in a state in which it is ready to perform the at least one measurement instruction.

According to a fifth aspect of the invention there is provided a method of operating a machine tool apparatus comprising a machine tool and a controller and further comprising a measurement device on the machine tool for measuring a workpiece machined, or to be machined, by the machine tool, the controller configured to execute a machine tool program defining a measurement process for measuring the workpiece, the method comprising: the controller executing said machine tool program in order to effect measurement of the workpiece, in which said machine tool program comprises a series of calls to functions, such functions being configured to facilitate execution of at least one measurement instruction for controlling the measurement device so as to measure the workpiece, and in which said functions further comprise at least one instruction for checking, prior to execution of the at least one measurement instruction, that the machine tool apparatus is in a state in which it is ready to perform the at least one measurement instruction, and the function further comprising at least one instruction so that if the check determines that the machine tool apparatus is not ready, then the function sets up the machine tool apparatus such that it is in a state in which it is ready to perform the at least one measurement instruction.

Embodiments of the invention will now be described, by way of example only, with reference to the following drawings in which:
Figure 1 is a schematic illustration of a machine tool apparatus comprising a machine tool and a CNC;
Figure 2 illustrates an example set of instructions for measuring features of a workpiece according to a prior art technique;
Figure 3 illustrates another example set of instructions for measuring features of a workpiece according to a different prior art technique;
Figure 4 illustrates an example set of instructions comprising calls to functions for measuring features of a workpiece according to the present invention; and
Figure 5 illustrates a flow chart of process control for a function according to the present invention.

Referring to Figure 1, as briefly explained above, a machine tool apparatus 2 can comprise a machine tool 4 and a NC 6. The machine tool 4 comprises a spindle 10 and a workpiece table 11. A variety of different tools can be loaded into the spindle 10 for operating on a workpiece 12 located on the workpiece table 11. The spindle 10 (and hence a tool loaded in it) and the workpiece table 11 can be moved relative to each other in at least one degree of freedom (e.g. at least one linear degree of freedom) so as to enable the tool in the spindle 10 to interact with the workpiece 12. In this case, the workpiece table 11 is movable in two orthogonal degrees of freedom (e.g. horizontal X, Y degrees of freedom) and the spindle 10 is moveable in one degree of freedom that is orthogonal to the two degrees of freedom of the workpiece table 11 (e.g. it is moveable in a vertical Z degree of freedom). As will be understood, the workpiece table 11 and/or the spindle 10 (and/or another part of the machine tool) can provide at least rotational degree of freedom. Indeed, the spindle 10 typically facilitates spinning of a tool located in the spindle 10 about the Z-axis. Also, it is known for a workpiece 12 to be located on a turntable provided by the workpiece table 11 which facilitates reorientation of the workpiece 12 about at least one axis.

In the present example tools can be loaded automatically into the spindle 10. For example, as is known, multiple tools can be stored in a rack, e.g. a carousel/hive, (not shown) and loaded into the spindle 10 on instruction from the NC 6. Accordingly, tools can be swapped in and out of the spindle 10 automatically. In other types of machine tool, instead of or as well as a spindle 10, multiple tools can be stored in a carousel which can be positioned so as to directly interact with a workpiece 12. In this case, the NC 6 can select which tool in the carousel is the active tool and hence can instruct the carousel to rotate so as to put the active tool in position.

As is known, a measurement device can be loaded into the machine tool's spindle 10 (or positioned in the active position of a carousel). The measurement device can be used to inspect the workpiece 12, for example before and/or after a machining operation. A variety of different types of measurement device can be used including measurement probes 8. Measurement probes 8 can be used to obtain (dimensional) metrology information regarding the workpiece 12. As will be understood types of measurement probe include contact and non-contact probes. Contact probes include probes 8 comprising a body 22 with a stylus 24 extending therefrom which is configured to touch the workpiece to be measured, e.g. which can comprise a stylus tip 26 configured to be brought into contact with the workpiece 12. The stylus 24 can be configured to deflect relative to the probe's body 22 on contact with the workpiece. In touch-trigger probes a signal can be issued by the probe 8 on detection of deflection caused by contact with the workpiece. In analogue/scanning probes the probe 8 can provide a measure of the extent of stylus deflection. Analogue probes include those which provide a measure of extent of stylus deflection in at least one degree of freedom, for example two or three degrees of freedom. Analogue probes include those that provide an aggregated measure of deflection for at least two of the dimensions in which it can measure, optionally at least three dimensions. Furthermore, a measurement probe 8 could be configured to obtain a measurement of the extent of deflection but only output a signal on detection of a predetermined condition (e.g. deflection beyond a predetermined threshold).

The NC 6 comprises an interface 14 comprising an operator input device 16 (e.g. a keyboard) and an operator output device 18 (e.g. a screen) via which an operator can input instructions/commands. The NC 6 also comprises electronics such as processors and transmitters and receivers for communicating with the machine tool 4. For example, the NC 6 can send instructions to the machine tool 4 and receive feedback from the machine tool 4 via a communications channel 20. For instance, the NC 6 could receive spindle 10/workpiece table 11 position information (e.g. from various position encoders (not shown)). As will be understood, the first communications channel 20 can take any of a variety of different forms including various wired and/or wireless communications technologies.

Communication between the NC 6 and a measurement probe 10 loaded in the spindle 8 can be via the same first communications channel 20 or via a separate second communications channel 30 (which again can take any of a variety of different forms including various wired and/or wireless communications technologies). Indeed, often a machine tool 4 provides no means for a probe 8 to tap into the machine tool's feedback/communication system, and often have no means for the probe 8 to pass its signals across the spindle 10. Accordingly, as shown in this example, a transceiver 32 is provided with which the probe 8 can communicate (in this example wirelessly - illustrated by the dashed line between the probe 8 and the transceiver 32) when it is loaded in the machine tool's spindle 10. The transceiver 32 can therefore relay signals between the probe 8 and the NC 6.

In use, the NC 6 sends instructions to the machine tool 4 via the first communications channel 20 in order to control the machine tool. This can for example include controlling the loading of a tool into the spindle 10, controlling relative movement of a tool in the spindle 10 and the workpiece 12, and for example can include controlling operation of the spindle 10 (e.g. causing it, and hence any tool loaded in it, to spin). When a measurement probe 8 is loaded in the spindle 10 the NC 6 also sends instructions to the measurement probe 8 via the second communications channel 30 which are relayed to the measurement probe 8 by the transceiver 32. Such instructions can include for example turning the measurement probe 8 on (as will be understood the measurement probe 8 can comprise a battery for powering the measurement probe 8). In some embodiments, other communications with the probe can include requesting status information from the probe, for instance requesting deflection data from the probe. In return, the NC 6 receives information/signals from the machine tool 4 (such as spindle10 /workpiece table 11 position signals as mentioned above) and also receives information from the probe 8 (such as probe trigger/deflection signals). As will be understood, the NC 6 (or other downstream processor(s)) can collate and combine such signals in order to determine metrological information regarding the workpiece 12.

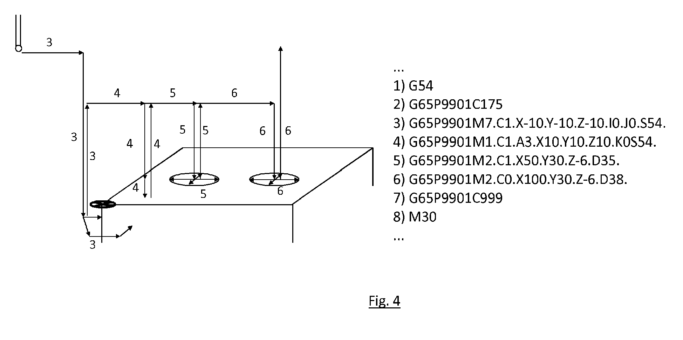

The NC 6 instructs the operation of the machine tool 4 and the measurement probe 8 in accordance with a machine tool program. Accordingly, a machine tool program is loaded into the NC 6, and the NC 6 reads the instructions in the machine tool program and controls the machine tool 4 and measurement probe 8 in accordance with the instructions. Examples of machine tool programs in accordance with prior art techniques are illustrated in Figures 2 and 3 and these are explained above in the background section of this application. An example of a machine tool program in accordance with our invention is illustrated in Figure 4. Typically a machine tool program will comprise a series of machining instructions (e.g. cutting, milling, grinding instructions) as well as measuring instructions. However, for the sake of clarity of illustration of the invention such machining instructions have been omitted from the machine tool programs shown in Figures 2 to 4. As will be understood, the instructions shown in Figures 2 to 4 could be located at the beginning, end or somewhere part way through a larger machine tool program which comprises other machining and/or measuring instructions.

As will be understood, all of the machine tool programs illustrated in Figures 2 to 4 make use of functions, also commonly referred to as macros, routines, subroutines, or subprograms. Accordingly, during execution the machine tool program contains calls to such functions which themselves can comprise a series of instructions for performing a particular task. In particular a function can comprise measurement instructions for performing a particular measurement operation (e.g. measuring a corner, plane, bore, boss, etc). Providing such functions can avoid the need for the operator to input the same measurement instructions each time a particular measurement instruction is to be performed.

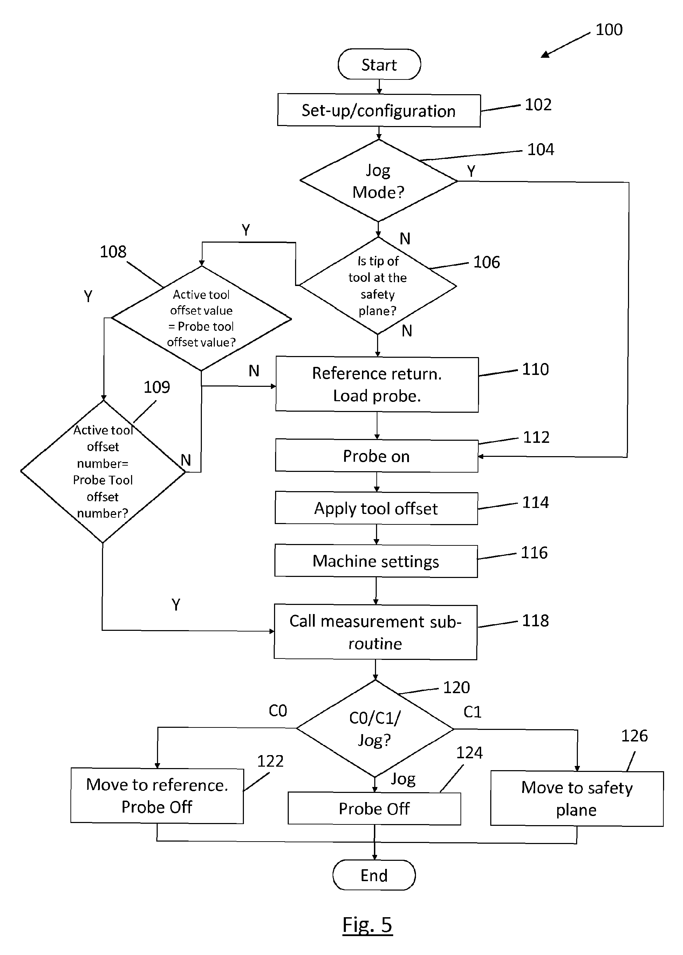

On first impressions it might appear that there are minimal visual differences between the (prior art) machine program of Figure 3 and the machine program of Figure 4 according to our invention, but as explained in more detail below in connection with the flow-chart of Figure 5, the functions according to our invention are configured so as to safeguard against dangerous use of a measurement probe 8, which the functions of the prior art are not.

As can be seen in Figure 3, a plurality of different functions are provided, one for each of the different types of measurement operations to be performed. For instance, a function having the call P9911 is used for moving the probe to perform a corner measurement. A different function having the call P9909 is used for taking measuring a single point Z-measurement. Another different function having the call P9901 is used for measuring a hole/bore. As mentioned above, in this case, four various input parameters U1, U2, U3 (or no U present) can be used to link successive instructions together and tell the machine tool what stage of the measurement the program is at. Other parameters include telling the machine tool the retract height (in this example this is the "A#" parameter - in the example shown the retract height is set at 100).

In contrast, as shown in Figure 4, in this embodiment of the invention only one function (having the call P9901) need be called for each of the different types of measurement operation. Instead of different functions having different calls, a parameter (in this case the "M#" parameter) is used to specify which type of measurement operation that is to be performed. As also illustrated in Figure 4, line 2 illustrates the setting of the safety plane to 175 and then putting it back to the default value at line 7. As will be understood, in another embodiment the safety plane could have a pre-set value which cannot be changed during the running of the program. Accordingly, in this case lines 2 and 7 could be omitted.

Figure 5 is a flow-chart illustrating the process 100 control of a function according to the present invention (e.g. the process control of a function having the call P9901 as illustrated in the machine tool program of Figure 4). When a function is called the process starts at step 102 at which various set-up/configuration steps are taken. These might vary from machine to machine but will typically comprise setting (e.g. loading into a variable accessible by the machine tool program) a (e.g. global) safety plane, setting the pocket of the rack/carousel/hive in which the measurement probe to be used is stored, setting a stand-off distance, finding the tool length from a table which contains tool lengths associated with each tool loaded in the rack/carousel/hive (but not setting the machine's tool offset variable - this is done later as explained below), setting the measurement units to be used (e.g. metric/imperial), etc. As will be understood, a safety plane can be a plane which on one side of which the machine tool knows that the probe is safe to be moved around without risk of collision and so movements can be performed quickly, whereas on the other side movement should occur more slowly so that if contact/collision does occur the machine tool can react quickly enough to minimise/avoid damage to the probe/workpiece/machine tool. As will be understood, the safety plane can be set with respect to a workpiece (e.g. a workpiece offset/workpiece coordinate system) or with respect to the machine tool.

At step 104, it is then determined if the process should be in "Jog mode". As explained in more detail below, the function has a number of different parameters associated with it which includes a "mode" variable which in this case can take the value of either "C0" or "C1". If the "mode" variable is not set (i.e. if the function call doesn't include either C0 or C1, then the function determines at step 104 that the process should be in "Jog mode". Jog mode is where the operator manually moves the measurement probe, e.g. using a Jog wheel, to a location adjacent to the feature to be measured. For the moment we consider the case in which the function call did include a C# parameter (i.e. having either a C0 or C1 value), and so control proceeds to step 106 in which it is determined if the measurement probe's 8 tip is at the safety plane (the value for which was set at step 102). Accordingly, this involves interrogating and using the current machine axis positions as well as the live tool offset variable. Accordingly, this step is essentially checking whether the measurement probe 8 is at the safety plane as well as whether the tool offset variable has been applied. If step 106 is passed then control proceeds to step 108 in which it is determined if the value associated with the tool offset variable is (approximately) equal to that assigned to the measurement device to be used to measure the workpiece. The test at this step could require the value of the tool offset to exactly match, or some small margin of error could be allowed if desired. If step 108 is passed, then a final test is performed at step 109 to check that the tool offset reference number associated with the tool offset variable matches the tool offset reference number for the measurement device to be used. If step 109 is passed then control can jump straight to calling the measurement sub-routine at step 118 (explained below). But if any of steps 106, 108, 109 fails, then the function knows that the machine tool might not be ready (e.g. not in a safe state) to begin the measurement process (e.g. it might be that: the probe is not loaded; the tool offset has not been set or is incorrect; the probe is not in a safe starting position; the probe might not be turned on; and/or safety critical machine settings might not have been set or could have unsafe values/settings).

Accordingly, if any of steps 106,108 or 109 return negative, a number of steps are taken to ensure that the machine tool is in a state in which a measurement procedure can be safely performed. Initially control is passed to step 110 in which the machine tool is configured to move the spindle 10 (and hence any measurement probe 8 loaded within it) and the workpiece table 11 to their reference (or "home") position and to load the measurement probe into the spindle. At step 112 the probe is then turned on and at step 114 the tool offset is applied (e.g. loaded into a tool offset variable). Machine specific settings can then be applied at step 116 (e.g. default feed rate, default back-off distance).

After completion of step 116, control is passed to step 118 in which a call to a measurement sub-routine is made. Which measurement sub-routine is called depends on the "M#" parameter input with the function call. For instance, in this example M7 specifies that the corner measuring function should be called, M1 specifies that a single a single point Z-measurement should be called, and M2 specifies that a hole/bore measurement should be called. Once the measurement sub-routine is complete, control returns to process 100, and in particular to step 120 at which it determines if and what "C#" parameter was input with the function call. Accordingly if no "C#" parameter was set then as explained above the function is in a Jog (manual) mode and so at this stage control proceeds to step 124 at which the probe is turned off. If the C# parameter was input as C1, then control proceeds to step 126 at which the probe is simply moved to the safety plane (which was set during step 102). If the C# parameter was input as C0, then control proceeds to step 122 at which the probe is moved to the machine's reference/home position and the probe is turned off.

The C# parameter can therefore be used to link together various measurement routines. For instance, rather than returning the spindle 10 and hence the probe 8 to the machine tool's reference/home position and turning the probe off after each measurement operation, if the operator/programmer knows that there will be another measurement operation to follow, then by setting the C# parameter with the C1 value, then the function can know that another measurement function will follow and hence tell the NC 6 to control the machine tool 4 to merely move the spindle 10 so as to place the measurement probe 8 at the predefined global safety plane. Accordingly, when the function is called the next time, at step 106 it will be determined at step 106 that the measurement probe is at the safety plane (unless something has gone wrong and hence the machine is in an unknown/unsafe state and so steps 110 to 116 will be performed again to ensure safe operation), and since the tool offset was applied on the previous call to the function it will be determined at steps 106, 108 and 109 that the tool offset is applied and correct (unless an intervening instruction has cleared the tool offset and hence the machine is in an unknown/unsafe state and so steps 110 to 116 will be performed again to ensure safe operation) and so the process 100 can skip straight to step 118 at which the measurement sub-routine can be called and executed.

By virtue of the safety checking steps of steps 106,108 and 109, the number of values that the linking (C#) parameter can be reduced to only two, thereby again simplifying the task of the operator/programmer when inserting measurement instructions.

As mentioned above, if no linking (C#) parameter has been provided with the function call, then it is assumed at step 104 that the function should operate in Jog mode. In this case process control is passed to step 112 at which point the probe is turned on, the tool offset is applied at step 114 and the machine settings are set at step 116 before the measurement sub-routine is called at step 118. As will be understood, in such a Jog mode the operator should manually move the probe to the point at which measurement is to occur before running a Jog mode function.

In the above described embodiment of the invention, only one function is provided for all different types of measurement instructions. This simplifies implementation because the checking steps can be implemented in only one function when then calls the relevant measurement operation function. Nevertheless, as will be understood, this need not necessarily be the case and for instance a plurality of different functions that are directly callable by the machine tool program can be provided (each having their own "P####" call - like in the case of Figure 3), wherein each of the functions have been provided with the checking instructions.

In the embodiment described above, the step of checking at least one property concerning the measurement device so as to prevent execution of measurement instructions with the machine tool in a state in which at least one safety critical property required for a safe measurement operation has not been set, comprises directly checking whether the measurement probe 8 is at the safety plane (step 106) and if so checking whether the tool offset is applied (step 108).

Directly checking machine variables, such as the actual machine axis positions, and the actual/active tool offset value, avoids pitfalls associated with other techniques, such as checking conceptual flags which are used to indicate when some function or operation has occurred. This is because errors in cycles/functions, or an interruption to or resetting of a program can cause unexpected changes to the machine and the status of the flag may not be updated to reflect this. Accordingly, a flag could incorrectly indicate that a setting up procedure has been performed, or that a variable is correctly set, when in fact a subsequent action or event has meant that this is no longer the case. The present invention avoids this by directly checking the relevant aspects of the machine tool that are required for safe operation (e.g. the actual machine position and the active tool offset value).

Checking whether the tool offset is applied and correct as well as checking whether the probe is at the safety plane can be advantageous because in some circumstances the probe might be at the safety plane but the tool offset might not be applied or might be incorrect. For example, a reset operation might have occurred which cleared the tool offset value. Accordingly, performing these checks helps to catch such situations and prevent the measurement operation from being performed without the correct tool offset being applied (which could therefore cause a probe/workpiece crash).

As will be understood, the safety plane can be pre-set variable. The machine can have a default safety plane. Optionally, a machine tool program can comprise a value representing the safety plane. Accordingly, a user/operator/programmer can set the safety plane. Furthermore, the safety plane can be changed during the execution of a machine tool program, e.g. part way through a machine tool program.

## Claims

1. A computer implemented function for a machine tool apparatus comprising a machine tool and a controller, the function callable by a machine tool program which is executable by the controller, the function comprising at least one measurement instruction for effecting control of a measurement device so as to measure a workpiece, **characterised in that** the function comprises at least one instruction for checking, prior to facilitating execution of at least one measurement instruction, that the machine tool apparatus is ready to perform the at least one measurement instruction, and the function further comprising at least one instruction configured such that if the check determines that the machine tool apparatus is not ready, then the function sets up the machine tool apparatus such that it is ready to perform the at least one measurement instruction.

2. A computer implemented function as claimed in claim 1, in which said at least one instruction for checking comprises establishing whether the machine tool apparatus is currently set up to use the measurement device.

3. A computer implemented function as claimed in claim 1 or 2, in which said at least one instruction for checking comprises checking at least one machine tool apparatus attribute, the status of which is indicative of whether a plurality of other machine tool apparatus attributes required for the machine tool apparatus to be ready to perform the at least one measurement instruction have been set.

4. A computer implemented function as claimed in any preceding claim, in which said function comprises instructions for moving the measurement device to either a predefined safety position or to the machine's default home position after execution of the at least one measurement instruction.

5. A computer implemented function as claimed in any preceding claim, in which said checking comprises checking active machine parameters, for example the current machine axis positions, to determine machine tool apparatus' status.

6. A computer implemented function as claimed in any preceding claim , in which said at least one instruction for checking comprises checking whether the measurement device is at a predefined safety position.

7. A computer implemented function as claimed in any preceding claim, in which said at least one instruction for checking comprises checking a tool offset variable.

8. A computer implemented function as claimed in any preceding claim, in which the at least one instruction enabling control of a measurement device so as to measure a workpiece comprises a call to another function which comprises measurement instructions.

9. A computer implemented function as claimed in any preceding claim, in which the function comprises as an input parameter, a measurement instruction linking parameter, which the function uses to determine how to relatively move the workpiece and measurement device after execution of the measurement instructions.

10. A computer implemented function as claimed in any preceding claim, in which the measurement device comprises a measurement probe, for example a contact probe, for instance a touch-trigger probe.

11. A machine tool program for controlling a machine tool to interact with a workpiece, the machine tool program comprising at least one call to a function according to any preceding claim.

12. A computer program product, comprising at least one measurement function callable by a machine tool program, said at least one function comprising at least one instruction for enabling control of a measurement device so as to measure a workpiece, **characterised in that** at least one measurement function comprises at least one instruction for checking, prior to execution of any measurement instructions, that the machine tool apparatus is in a state in which it is ready to perform the at least one measurement instruction, and the function further comprising at least one instruction so that if the check determines that the machine tool apparatus is not ready, then the function sets up the machine tool apparatus such that it is in a state in which it is ready to perform the at least one measurement instruction.

13. A computer program product as claimed in claim 10, in which all functions callable by the machine tool program for enabling measurement of a workpiece comprise said at least one instruction for checking , prior to execution of any measurement instructions, that the machine tool apparatus is in a state in which it is ready to perform the at least one measurement instruction, and the function further comprising at least one instruction so that if the check determines that the machine tool apparatus is not ready, then the function sets up the machine tool apparatus such that it is in a state in which it is ready to perform the at least one measurement instruction .

14. A controller for a machine tool, comprising memory storing at least one function callable by a machine tool program which is executable by a processor of the controller, the function comprising at least one instruction for enabling control of a measurement device loaded on the machine tool so as to measure a workpiece, **characterised in that** the function comprises instructions for checking, prior to facilitating execution of the at least one measurement instruction, that the controller and/or the machine tool is in a state in which it is ready to perform the at least one measurement instruction, and the function further comprising at least one instruction so that if the check determines that the controller and/or the machine tool is not ready, then the function sets up the controller and/or the machine tool such that it is in a state in which it is ready to perform the at least one measurement instruction.

15. A method of operating a machine tool apparatus comprising a machine tool and a controller and further comprising a measurement device on the machine tool for measuring a workpiece machined, or to be machined, by the machine tool, the controller configured to execute a machine tool program defining a measurement process for measuring the workpiece, the method comprising:
the controller executing said machine tool program in order to effect measurement of the workpiece, in which said machine tool program comprises a series of calls to functions, such functions being configured to facilitate execution of at least one measurement instruction for controlling the measurement device so as to measure the workpiece, and in which said functions further comprise at least one instruction for checking, prior to execution of the at least one measurement instruction, that the machine tool apparatus is in a state in which it is ready to perform the at least one measurement instruction, and the function further comprising at least one instruction so that if the check determines that the machine tool apparatus is not ready, then the function sets up the machine tool apparatus such that it is in a state in which it is ready to perform the at least one measurement instruction.
